# EUROPEAN PATENT SPECIFICATION

(11) **EP 3 943 989 B1**
(45) Date of publication and mention of the grant of the patent: **15.10.2025**
(21) Application number: 19920612.9
(22) Date of filing: 21.03.2019
(51) Int. Cl.: G02B 5/32, F21S 43/14, F21S 43/20, F21S 43/31, F21S 43/40, B60Q 1/00, B60Q 1/26, G03H 1/22, G03H 1/26, G02B 5/08

(54) **LAMP ASSEMBLY FOR VEHICLE**
LAMPENANORDNUNG FÜR FAHRZEUG
ENSEMBLE LAMPE POUR VÉHICULE

(30) Priority: 20.03.2019 KR 20190031973
(43) Date of publication of application: 26.01.2022
(73) Proprietor: ZKW Group GmbH, 3250 Wieselburg (AT)
(72) Inventor: JO, Ju Ung, Seoul 06910 (KR)
(74) Representative: Patentanwaltskanzlei Matschnig & Forsthuber OG
(86) International application number: PCT/KR2019/003300
(87) International publication number: WO 2020/189830

(56) References cited:
- DE-A1- 102014 117 842
- DE-A1- 102014 119 326
- DE-A1- 102014 204 535
- DE-A1- 102015 115 128
- DE-A1- 102015 121 697
- DE-A1- 102017 203 889
- JP-A- 2018 156 836
- KR-A- 20150 134 980
- KR-A- 20160 049 767
- KR-A- 20160 062 780
- KR-A- 20170 080 972
- KR-A- 20180 069 598
- KR-A- 20180 070 256
- KR-A- 20180 078 883
- US-A- 5 963 345
- US-B2- 8 317 379

## Description

### BACKGROUND

### 1. Technical Field

The present invention relates to a lamp assembly for a vehicle, and more particularly to a lamp assembly mounted to a front side or a rear side of a vehicle to emit light to the outside.

### 2. Description of Related Art

Various vehicle lamps, such as headlights, taillights, fog lights, turn signals, brake lights, daytime running lights, and the like, are mounted to a front portion and a rear portion of a vehicle.

Lamps of a vehicle are not only used for convenience and safety when driving the vehicle, but also serve as a means of improving the external aesthetic appearance of the vehicle.

Recently, a device for reconstructing a holographic image in a vehicle lamp using a hologram film has been developed. In this regard, KR101684003B1 discloses a rear lamp for a vehicle, which includes a reflective hologram film, a light source, and a reflector, and is configured such that the light source radiates light at a lower position than the position of the hologram film.

However, in the rear lamp for a vehicle disclosed in KR101684003B1, since the light source is mounted between the hologram film and an outer lens, at least a predetermined gap is required between the hologram film and the outer lens, and thus there is limitation in the extent to which it is possible to reduce the thickness of the vehicle rear lamp in a forward-backward direction.

In addition, a rear lamp for a vehicle is generally mounted adjacent to a trunk of a vehicle. In this case, an increase in the thickness of the rear lamp in the forward-backward direction leads to a reduction in the available space in the trunk. Therefore, the thickness of the rear lamp is considered an important factor.

In addition, in the rear lamp for a vehicle disclosed in KR101684003B1, light is radiated to the outside by being sequentially reflected by the reflector and the hologram film in the rearward direction of the vehicle. This configuration is disadvantageous in that the quantity of light radiated to the outside is not sufficient. In order to overcome this shortcoming, the rear lamp for a vehicle disclosed in KR101684003B1 includes a separate reflection part, which is coupled to the hologram film in order to secure a sufficient quantity of light. DE102014119326A1 discloses a lighting device for vehicles, in particular a signal light, with a light source for emitting a light beam and an optical unit associated with the light source for producing a predetermined light function, the optical unit having a holographic element and a lens arranged in the main emission direction in front of the holographic element. Furthermore, KR 2018 0069598 A discloses a hologram image reproducing lamp for a vehicle, in which light externally exposed is realized in the form of a hologram image.

### SUMMARY OF THE INVENTION

A three-dimensional hologram is observed from a position spaced apart from the surface of a hologram film, and the hologram film is located inside a lamp due to the structure of the lamp. When a lamp for a vehicle, such as a rear lamp, is produced, if the characteristics of a hologram and a hologram film and the position at which the reconstructed hologram is identified are not sufficiently considered, issues may arise relating to the hologram not being clearly distinguishable or the viewing angle of the hologram decreasing. An aspect of the present invention is to provide a lamp assembly for a vehicle that is capable of addressing the above issues.

Another aspect of the present invention is to provide a lamp assembly for a vehicle that is provided with a hologram film and is capable of securing a viewing angle of a transmission hologram without an increase in the thickness of the lamp assembly in a forward-backward direction.

A further aspect of the present invention is to provide a lamp assembly for a vehicle in which a light source for reconstructing a hologram is disposed in an area in which a hologram is reconstructed, thereby enabling clear identification of a hologram.

Still another aspect of the present invention is to provide a lamp assembly for a vehicle that is capable of preventing the resolution of a hologram from being degraded due to an increase in the phase difference between beams radiated in order to reconstruct the hologram.

Still another aspect of the present invention is to provide a lamp assembly for a vehicle that is capable of effectively performing additional functions of the lamp while reconstructing a hologram, without causing an increase in the size or thickness of the lamp assembly.

Still another aspect of the present invention is to provide a lamp assembly for a vehicle that is capable of reconstructing various types of holograms.

A lamp assembly for a vehicle according to the present invention is defined in claim 1 and can be mounted to a front side or a rear side of a vehicle to emit light to the outside, and includes a hologram film in which a hologram is recorded, the hologram film being configured such that the hologram is reconstructed inside by light that is transmitted after being irradiated from the inside with a slope with respect to a normal direction of the incident surface, a light-transmissive cover disposed at a position further outside than the hologram film, and a reconstruction light source disposed at a position further inside than the hologram film with a slope with respect to the normal direction, the reconstruction light source being configured to emit reconstructed incident light toward the hologram film such that the hologram is reconstructed.

In the lamp assembly for a vehicle according to the present invention, the hologram film is divided into at least a first hologram film and a second hologram film, the reconstruction light source is divided into at least a first reconstruction light source configured to emit first reconstructed incident light toward the first hologram film and a second reconstruction light source configured to emit second reconstructed incident light toward the second hologram film, and the first hologram film and the first reconstruction light source are symmetrical with the second hologram film and the second reconstruction light source.

In the lamp assembly for a vehicle according to an embodiment of the present invention, the first hologram film and the second hologram film may be disposed so as to form a continuous flat surface together or to form a continuous curved surface together.

The lamp assembly for a vehicle according to an embodiment of the present invention may further include an auxiliary light source disposed at a position further inside than the hologram film and configured to emit auxiliary incident light toward the hologram film, and the angle between the radiation direction of the auxiliary incident light and the normal of the incident surface of the hologram film may be less than the angle between the radiation direction of the reconstructed incident light and the normal of the incident surface of the hologram film.

The lamp assembly for a vehicle according to an embodiment of the present invention may further include an auxiliary light source disposed at a position further inside than the hologram film and configured to emit auxiliary incident light toward the hologram film, and the radiation direction of the auxiliary incident light may be identical to the normal direction of the incident surface of the hologram film.

In the lamp assembly for a vehicle according to an embodiment of the present invention, the luminous intensity of the auxiliary incident light may be higher than the luminous intensity of the reconstructed incident light.

In the lamp assembly for a vehicle according to an embodiment of the present invention, two or more auxiliary light sources may be provided to emit auxiliary incident lights having different wavelengths.

The lamp assembly for a vehicle according to an embodiment of the present invention may further include an auxiliary hologram film disposed at a position further inside than the light-transmissive cover so as to be parallel to the hologram film and in which an auxiliary hologram is recorded, wherein the auxiliary hologram film is configured such that the auxiliary hologram is reconstructed by an auxiliary incident light that is transmitted after being irradiated .

A lamp assembly for a vehicle according to another embodiment of the present invention may be mounted to a front side or a rear side of a vehicle to emit light to the outside, and may include a reflector disposed at a position further inside than the hologram film, and a reconstruction light source disposed at a position further outside than the reflector and configured to emit light toward the reflector, wherein light reflected by the reflector may form reconstructed incident light that travels to the hologram film such that the hologram is reconstructed.

In the lamp assembly for a vehicle according to an embodiment of the present invention, the reflector may be divided into at least a first reflector configured to reflect light emitted from the first reconstruction light source to form first reconstructed incident light to be incident on the first hologram film and a second reflector configured to reflect light emitted from the second reconstruction light source to form second reconstructed incident light to be incident on the second hologram film.

In the lamp assembly for a vehicle according to an embodiment of the present invention, the first reflector may be symmetrical with the second reflector.

In the lamp assembly for a vehicle according to an embodiment of the present invention, the first hologram film and the second hologram film may be disposed so as to form a continuous flat surface together or to form a continuous curved surface together.

In the lamp assembly for a vehicle according to an embodiment of the present invention, the hologram film is configured such that the hologram is reconstructed by light that is transmitted after being irradiated with a slope with respect to a normal direction of the incident surface, and the radiation direction of the first reconstructed incident light and the radiation direction of the second reconstructed incident light may be different from each other.

The lamp assembly for a vehicle according to an embodiment of the present invention may further include an auxiliary light source disposed at a position further inside than the hologram film and configured to emit auxiliary incident light toward the hologram film, and the angle between the radiation direction of the auxiliary incident light and the normal of the incident surface of the hologram film may be less than the angle between the radiation direction of the reconstructed incident light and the normal of the incident surface of the hologram film.

The lamp assembly for a vehicle according to an embodiment of the present invention may further include an auxiliary light source disposed at a position further inside than the hologram film and configured to emit auxiliary incident light toward the hologram film, and the radiation direction of the auxiliary incident light may be identical to the normal direction of the incident surface of the hologram film.

In the lamp assembly for a vehicle according to an embodiment of the present invention, the luminous intensity of the auxiliary incident light may be higher than the luminous intensity of the reconstructed incident light.

The lamp assembly for a vehicle according to an embodiment of the present invention may further include a side light source configured to emit light toward the outside of the light-transmissive cover such that the light does not interfere with the hologram film, and the reconstruction light source and the side light source may be respectively coupled to opposite surfaces of a single printed circuit board (PCB) substrate.

The lamp assembly for a vehicle according to an embodiment of the present invention may further include a first side light source and a second side light source configured to emit light toward the outside of the light-transmissive cover such that the light does not interfere with the hologram film, the first reconstruction light source and the first side light source may be respectively coupled to opposite surfaces of a single PCB substrate, and the second reconstruction light source and the second side light source may be respectively coupled to opposite surfaces of a single PCB substrate.

In a lamp assembly for a vehicle according to embodiments of the present invention, a light-transmissive cover is disposed outside a hologram film, and reconstructed incident light is radiated with a slope from the inside to reconstruct a transmission hologram, thereby realizing a hologram having high resolution, reducing the thickness of the lamp assembly, and increasing the viewing angle of a hologram.

In a lamp assembly for a vehicle according to embodiments of the present invention, a first hologram film, a second hologram film, a first reconstruction light source, and a second reconstruction light source are provided, thereby reconstructing various types of holograms, reducing the phase difference between beams radiated for reconstructing a hologram, realizing a hologram having high resolution, and reducing the thickness of the lamp assembly.

In a lamp assembly for a vehicle according to embodiments of the present invention, a reconstruction light source and an auxiliary light source are disposed such that light emitted from the reconstruction light source and light emitted from the auxiliary light source are radiated in respectively different directions. Accordingly, there may be provided a multi-functional lamp assembly for a vehicle capable of effectively performing additional functions of the lamp while reconstructing a hologram.

In a lamp assembly for a vehicle according to embodiments of the present invention, reconstruction and identification of a hologram may be easily realized, and an auxiliary light source may be turned on as needed in the area in which the hologram is reconstructed or in an area that overlaps the same. Accordingly, there may be provided a multi-functional lamp assembly capable of performing additional functions of the lamp without increasing the overall volume thereof.

In a lamp assembly for a vehicle according to embodiments of the present invention, a reconstruction light source and an auxiliary light source are selectively turned on as needed in order to selectively reconstruct a hologram or an auxiliary hologram. Accordingly, there may be provided a lamp assembly capable of producing a variety of stereoscopic images or variable stereoscopic images.

The effects of the present invention are not limited to those mentioned above, and other effects not mentioned may be clearly understood by those skilled in the art from the following description.

### BRIEF DESCRIPTION OF THE DRAWINGS

FIG. 1A is a cross-sectional view schematically illustrating a lamp assembly for a vehicle.
FIG. 1B is a cross-sectional view schematically illustrating a lamp assembly for a vehicle.
FIG. 2A is an exploded perspective view schematically illustrating a lamp assembly for a vehicle, and FIG. 2B is a cross-sectional view schematically illustrating the lamp assembly for a vehicle shown in FIG. 2A.
FIG. 3 is a cross-sectional view schematically illustrating a lamp assembly for a vehicle not according to the present invention.
FIG. 4 is a cross-sectional view schematically illustrating a lamp assembly for a vehicle according to an embodiment of the present invention.
FIG. 5 is a cross-sectional view schematically illustrating a lamp assembly for a vehicle according to still another embodiment of the present invention.
FIG. 6 is a cross-sectional view schematically illustrating a lamp assembly for a vehicle not according to the present invention.
FIG. 7 is a cross-sectional view schematically illustrating a lamp assembly for a vehicle not according to the present invention.
FIG. 8 is a cross-sectional view schematically illustrating a lamp assembly for a vehicle not according to the present invention.
FIG. 9 is a cross-sectional view schematically illustrating a lamp assembly for a vehicle not according to the invention.
FIG. 10 is a cross-sectional view schematically illustrating a lamp assembly for a vehicle not according to the invention.
FIG. 11 is a cross-sectional view schematically illustrating a lamp assembly for a vehicle according to still another embodiment of the present invention.
FIG. 12 is a cross-sectional view schematically illustrating a lamp assembly for a vehicle according to still another embodiment of the present invention.
FIG. 13 is a cross-sectional view schematically illustrating a lamp assembly for a vehicle not according to the invention.
FIG. 14 is a cross-sectional view schematically illustrating a lamp assembly for a vehicle according to still another embodiment of the present invention.

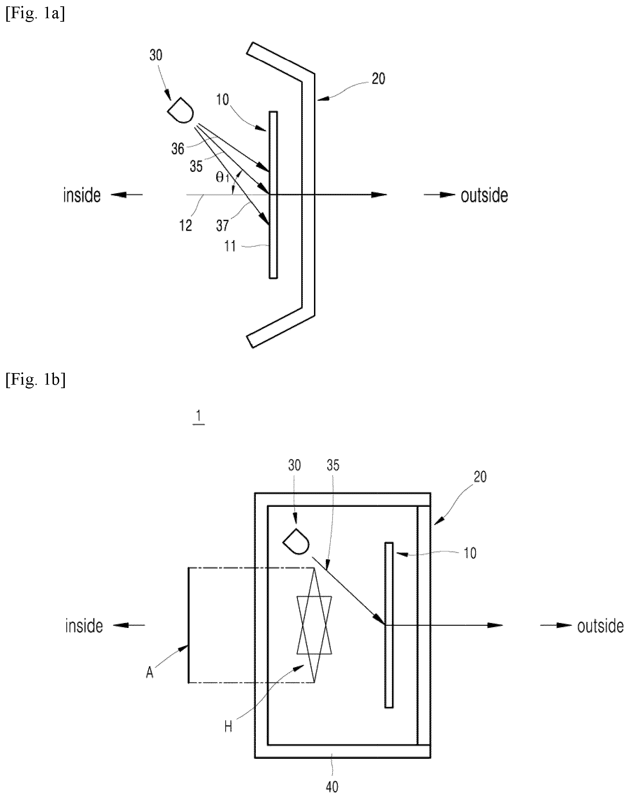

The direction in which light from each light source is radiated and the direction in which the light travels are denoted by arrows in FIGs. 1A, 1B, and 3 to 14.

### DETAILED DESCRIPTION

Hereinafter, exemplary embodiments and embodiments of the present invention will be described in detail with reference to the accompanying drawings. The same reference numerals used throughout the specification refer to the same constituent elements.

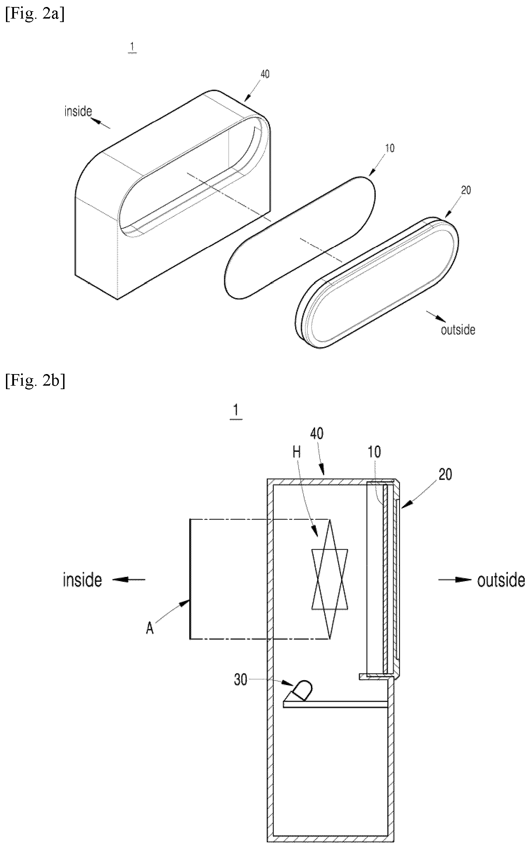

FIG. 1A is a cross-sectional view schematically illustrating a lamp assembly 1 for a vehicle, FIG. 1B is a cross-sectional view schematically illustrating a lamp assembly 1 for a vehicle, FIG. 2A is an exploded perspective view schematically illustrating a lamp assembly 1 for a vehicle, and FIG. 2B is a cross-sectional view schematically illustrating the lamp assembly 1 for a vehicle shown in FIG. 2A.

A lamp assembly for a vehicle (hereinafter, referred to as a lamp assembly 1) according to an embodiment of the present invention relates to a lamp assembly 1 that is mounted to the exterior of a vehicle and emits light to the outside (in a direction oriented away from the vehicle).

The lamp assembly 1 according to an embodiment of the present invention may be mounted to a front side of the vehicle, and may be configured to emit light forwards (to the outside), or may be mounted to a rear side of the vehicle, and may be configured to emit light rearwards (to the outside).

The lamp assembly 1 according to an embodiment of the present invention may be used as an independent lighting device mounted in the vehicle, or may constitute a part of a lighting device mounted in the vehicle.

The lamp assembly 1 according to an embodiment of the present invention may be used as the entirety or a part of a taillight. In this case, the term "outside" used in the specification may be a side oriented rearwards from the vehicle, and the term "inside" used in the specification may be a side oriented forwards from the vehicle.

The lamp assembly 1 according to an embodiment of the present invention may include a hologram film 10, a light-transmissive cover 20, and a reconstruction light source 30.

In addition, the lamp assembly 1 according to an embodiment of the present invention may further include a lamp housing 40.

The light-transmissive cover 20 forms an outer part of the lamp assembly 1. When the lamp assembly 1 is used as a taillight, the light-transmissive cover 20 forms a rear part of the lamp assembly 1.

The light-transmissive cover 20 may be made of a material that light is capable of penetrating, such as plastic or glass. The light-transmissive cover 20 may be formed to be transparent in order for a hologram to be identified, and at least a portion thereof may form a flat surface or a curved surface.

The lamp housing 40 may form a body to which other components of the lamp assembly 1 are coupled, and the light-transmissive cover 20 may be coupled to the outer end portion of the lamp housing 40.

The lamp housing 40 may be formed in the shape of a box that is at least partially open to the outside.

When the lamp housing 40 and the light-transmissive cover 20 are coupled to each other, a predetermined space may be formed to accommodate the components constituting the lamp assembly 1 therein.

The portion of the light-transmissive cover 20 to which the lamp housing 40 is coupled (the edge portion of the light-transmissive cover 20) may have a sealed structure for sealing the interior of the lamp assembly 1.

The hologram film 10 may be formed in a thin film shape. The hologram film 10 may be formed in a planar shape, or may be formed in a curved shape. The hologram film 10 may be disposed at a position further inside than the light-transmissive cover 20. In the case in which the lamp housing 40 is provided, the hologram film 10 may be located in the space formed by the lamp housing 40 and the light-transmissive cover 20.

The hologram film 10 may be in close contact with the light-transmissive cover 20, or may be disposed adjacent thereto.

In the case in which the hologram film 10 is located at a position spaced apart from the light-transmissive cover 20, a separate transparent film may be tightly coupled to the hologram film 10 in order to support the hologram film 10.

The hologram film 10 may be formed parallel to the surface of the light-transmissive cover 20 that is adjacent thereto.

The hologram film 10 may be formed as a commonly used hologram film in which a hologram is recorded. The hologram film 10 according to an embodiment of the present invention may be formed so as to reconstruct a transmission hologram. That is, when reconstructed incident light for reconstructing the hologram is radiated toward the hologram film 10 from a position further inside than the hologram film 10, the light is transmitted through the hologram film 10 while being radiated to the outside, and a holographic image H is reconstructed at a position further inside than the hologram film 10 (refer to FIGs. 1B and 2B).

In the lamp assembly 1 according to an embodiment of the present invention, the hologram film 10 may be manufactured through a computer generated hologram (CGH) method, which is a digital hologram process technology, or may be manufactured through an analog hologram process technology.

The following documents disclose technologies related to manufacture of a hologram film using a CGH method.
1. Kim, Hwi (2011), Computer Generated Hologram Calculation Theory of Triangular Mesh 3D Model, Broadcasting and Media Magazine, 16(2), pages 93 to 108.
2. Kim, Young Gwang (2016), Parametric Study for a Diffraction Optics Fabrication by Using a Direct Laser Lithographic System, Journal of the Korean Society for Precision Engineering, Vol. 33, No. 10, Oct. 2016, pages 845 to 850 (6 pages).
3. Gianluca Ruffato (2017), Design, fabrication and characterization of Computer Generated Holograms for anti-counterfeiting applications using OAM beams as light decoders, Scientific Reports, Vol. 7, Article No. 18011 (2017).
4. Jung, Jun Ho (2004), UV-nanoimprint Lithography, Physics & High Technology, Oct. 2004.

A reflection hologram and a transmission hologram are widely known in relation to the manufacture of a hologram (recording of a hologram) and reconstruction thereof using an analog method. Here, recording and reconstruction of a transmission hologram will be described briefly.

After a laser beam is transmitted through a spatial filter, it spreads in a spherical wave form, and then splits into two waves while passing through a beam splitter. One of the two waves is radiated to an object and becomes an object beam, and the other one is radiated to a hologram film and becomes a reference beam.

Interference patterns of the object beam and the reference beam are recorded in the hologram film, which is coated with a photosensitive material, whereby the hologram is recorded. When light having the same wavelength and phase as the reference beam is radiated in the same direction as the reference beam, the hologram is reconstructed.

In the lamp assembly 1 according to an embodiment of the present invention, the hologram film 10 is formed such that a transmission hologram is reconstructed. In the case in which the hologram is formed through the above-described analog method, when reconstructed incident light is radiated from the same direction as the reference beam radiated for recording the hologram, the hologram is reconstructed in the area from which the reconstructed incident light is radiated to the hologram film 10.

An "incident surface" of the hologram film 10 described in the present description is the surface of the hologram film 10 that is oriented toward the point from which light is incident.

In the lamp assembly 1 according to an embodiment of the present invention, the hologram film 10 is formed such that a hologram is reconstructed by light that is transmitted after being irradiated with a slope with respect to the direction of an arbitrary normal 12 of the incident surface 11. For example, in the case in which the hologram film 10 is formed in the shape of a film that is flat in the vertical direction, light for reconstructing the hologram is not incident in a direction perpendicular to the incident surface 11, but may be incident in a downward sloped direction (refer to FIGs. 1A and 1B), in an upward sloped direction (refer to FIG. 2B), in a leftward sloped direction, or in a rightward sloped direction. Thereby, a recorded hologram H is reconstructed. The direction in which the light for reconstructing the hologram H is radiated at a slope may be the same as the direction in which the reference beam is radiated at a slope.

FIGs. 1B and 2B schematically illustrate the hologram H that is reconstructed. Although the hologram H is not specifically illustrated in all of the drawings described in the present description, when light having the same conditions as described above is provided, the hologram H is naturally reconstructed. This is also applied to embodiments to be described below.

In the lamp assembly 1 according to an embodiment of the present invention, the reconstruction light source 30 may be located at a position further inside than the hologram film 10, and may emit light toward the hologram film 10. The hologram H is reconstructed by the entirety or a portion of the reconstructed incident light, which is the light emitted from the reconstruction light source 30.

In the lamp assembly 1 according to an embodiment of the present invention, the reconstruction light source 30 may formed as any of various types of light sources.

In the lamp assembly 1 according to an embodiment of the present invention, the reconstruction light source 30 may be formed as a laser light source. In this case, a direction 35 in which the reconstructed incident light from the reconstruction light source 30 is radiated may be the same as the direction in which the reference beam is radiated for recording the hologram film 10, and the reconstructed incident light may have the same wavelength and phase as the reference beam.

In the lamp assembly 1 according to an embodiment of the present invention, the reconstruction light source 30 may be formed as a light-emitting diode (LED) light source. In this case, the direction in which a portion of the reconstructed incident light from the reconstruction light source 30 is radiated may be the same as the direction in which the reference beam is radiated for recording the hologram film 10, and the reconstructed incident light may have the same wavelength and phase as the reference beam.

The light emitted from the reconstruction light source 30 may be white light, or may be light in a specific color range. For example, the light emitted from the reconstruction light source 30 may be red light having a wavelength ranging from 620 to 660 nm.

In the lamp assembly 1 according to an embodiment of the present invention, in the case in which the reconstruction light source 30 is formed as an LED light source, the center of the direction in which the reconstruction light source 30 is oriented, i.e. the direction in which light from the reconstruction light source 30 is radiated, may be the same as the direction in which the reference beam is radiated for recording the hologram film 10, and a portion of the light emitted from the reconstruction light source 30 may have the same wavelength and phase as the reference beam radiated for recording the hologram film 10.

In the lamp assembly 1 according to an embodiment of the present invention, in the case in which the reconstruction light source 30 is formed as an LED light source, the light emitted from the reconstruction light source 30 may be radiated while spreading radially. In this case, a reflector may be provided in order to concentrate the light in a specific direction within a specific angular range. Accordingly, the light may be radiated within a predetermined angular range.

Each light source described in the lamp assembly 1 according to an embodiment of the present invention may be formed to emit light in a specific direction. In this case, the specific direction may be referred to as a "radiation direction" of the light.

Alternatively, each light source described in the lamp assembly 1 according to an embodiment of the present invention may be formed such that light emitted therefrom spreads toward any one point but is entirely concentrated within a predetermined angular range. In this case, the central axis of the beams that travel may be the "radiation direction" of the light.

Alternatively, the "radiation direction" of the light described in the lamp assembly 1 according to an embodiment of the present invention may be understood to be the direction in which the beam having the highest luminous intensity, among the beams emitted from the corresponding light source, travels. For example, a radiation direction 35 of the reconstruction incident light may be the direction in which the beam having the highest luminous intensity, among the beams emitted from the reconstruction light source 30, travels.

In the lamp assembly 1 according to an embodiment of the present invention, the direction in which the reconstruction incident light is radiated may be determined so as to be suitable for reconstruction of the hologram H recorded in the hologram film 10. The radiation direction 35 of the reconstruction incident light may be sloped with respect to an arbitrary normal 12 of the incident surface 11 of the hologram film 10.

For example, in the case in which the hologram film 10 is formed in the shape of a film that is flat in the vertical direction, the radiation direction 35 of the reconstruction incident light may be oriented toward the incident surface 11 of the hologram film 10, but the reconstruction light source 30 may be disposed so as to be sloped downwards, upwards, leftwards, or rightwards. Accordingly, the radiation direction of the light from the reconstruction light source 30 is sloped with respect to an arbitrary normal 12 of the incident surface of the hologram film 10.

In the lamp assembly 1 according to an embodiment of the present invention, an angle θ1 between the radiation direction 35 of the reconstructed incident light and an arbitrary normal 12 of the incident surface 11 of the hologram film 10 may be an arbitrary value in the range from 30° to 60°, specifically an arbitrary value in the range from 40° to 50°, and more specifically 45°. In the case in which the angle θ1 between the radiation direction 35 of the reconstructed incident light and an arbitrary normal 12 of the incident surface 11 of the hologram film 10 is less than 30°, the overall thickness (the thickness in the forward-backward direction) of the lamp assembly 1 may increase. In the case in which the angle θ1 between the radiation direction 35 of the reconstructed incident light and an arbitrary normal 12 of the incident surface 11 of the hologram film 10 is greater than 60°, a sufficient quantity of light may not be secured, and the phase difference between beams of the reconstructed incident light may increase, thus leading to degradation in the resolution of the hologram.

FIG. 1A illustrates any one beam 36 and another beam 37 of the light that is emitted from the reconstruction light source 30 and is incident on the hologram film 10 in order to reconstruct the hologram H. When the above-described angle θ1 increases, the phase difference between the beam 36 and the beam 37 increases, which may decrease the overall resolution of the hologram. Therefore, according to the present invention, the angle θ1 is set within an appropriate range so as to prevent the above problem.

In the lamp assembly 1 according to an embodiment of the present invention, the reconstruction light source 30 may be disposed outside an area A in which the hologram is reconstructed when viewed in the horizontal direction (although "A" is illustrated in a straight line shape in FIGs. 1B and 2B, it denotes an area on which the hologram H is projected when viewed from the outside to the inside, which also applies to the description below).

In the lamp assembly 1 according to an embodiment of the present invention, since the reconstruction light source 30 is disposed outside the area A in which the hologram is reconstructed when viewed in the horizontal direction, the hologram H and the light from the reconstruction light source 30 are prevented from overlapping when shown to an observer present outside. In addition, since the reconstructed incident light emitted from the reconstruction light source 30 is transmitted through the surface of the hologram film 10 and travels to the outside, a hologram H having high resolution may be reconstructed, and the lamp assembly 1 may secure a predetermined luminous intensity.

In addition, in the lamp assembly 1 according to an embodiment of the present invention, since the hologram H is reconstructed in an area further inside than the hologram film 10 and the gap between the hologram film 10 and the light-transmissive cover 20 is minimized, the thickness (the "thickness" described in the embodiment of the present invention is a thickness in the forward-backward direction) of the lamp assembly 1 may be reduced while enabling observation of a hologram H having high resolution.

In addition, in the lamp assembly 1 according to an embodiment of the present invention, the hologram film 10 may be in close contact with or adjacent to the light-transmissive cover 20, and thus the hologram H may be reconstructed at a position close to the light-transmissive cover 20. Accordingly, the viewing angle of the hologram may be secured when viewed from the outside.

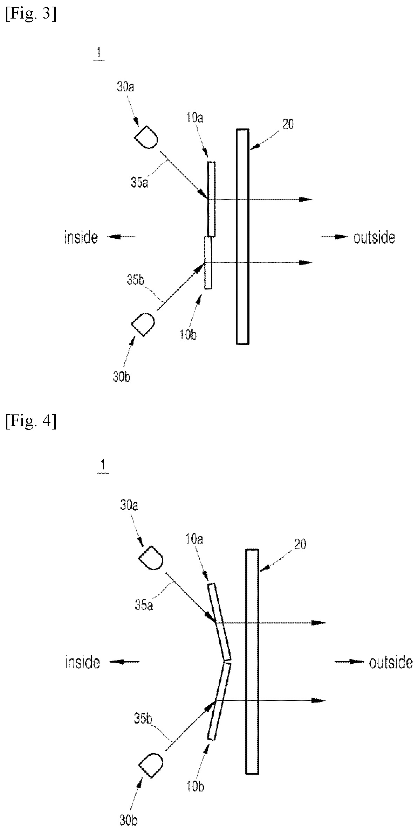

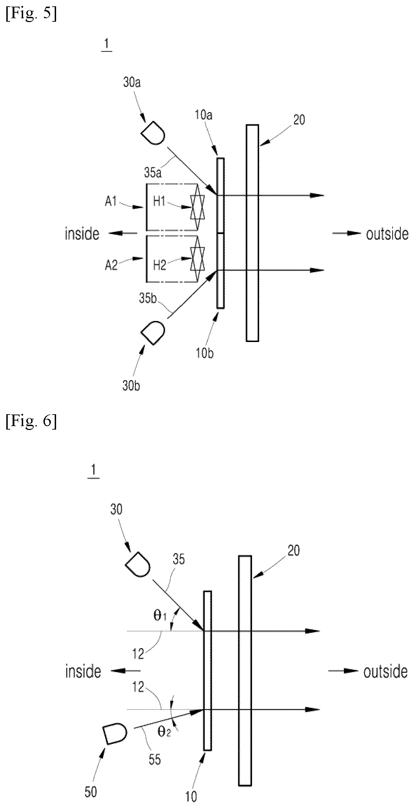

FIG. 3 is a cross-sectional view schematically illustrating a lamp assembly 1 for a vehicle according to an embodiment, FIG. 4 is a cross-sectional view schematically illustrating a lamp assembly 1 for a vehicle according to an embodiment of the present invention, and FIG. 5 is a cross-sectional view schematically illustrating a lamp assembly 1 for a vehicle according to still another embodiment of the present invention.

In the lamp assembly 1 according to an embodiment of the present invention, the above-described hologram film 10 may be divided into at least a first hologram film 10a and a second hologram film 10b. Each of the first hologram film 10a and the second hologram film 10b may have the same configuration as the hologram film 10 described above. The first hologram film 10a and the second hologram film 10b may be arranged in the upward-downward direction, or may be arranged in the leftward-rightward direction.

The first hologram film 10a and the second hologram film 10b may be disposed parallel to each other. The first hologram film 10a and the second hologram film 10b may be formed to be asymmetric with respect to each other or symmetrical with each other.

In the lamp assembly 1 according to an embodiment of the present invention, the above-described reconstruction light source 30 may be divided into at least a first reconstruction light source 30a and a second reconstruction light source 30b. Each of the first reconstruction light source 30a and the second reconstruction light source 30b may have the same configuration as the reconstruction light source 30 described above.

The first reconstruction light source 30a may be configured to emit first reconstructed incident light toward the first hologram film 10a. Accordingly, a hologram (a first hologram H1) may be reconstructed at a position further inside than the first hologram film 10a (refer to FIG. 5).

The second reconstruction light source 30b may be configured to emit second reconstructed incident light toward the second hologram film 10b. Accordingly, a hologram (a second hologram H2) may be reconstructed at a position further inside than the second hologram film 10b (refer to FIG. 5).

In the lamp assembly 1 according to an embodiment of the present invention, the radiation direction 35a of the first reconstructed incident light and the radiation direction 35b of the second reconstructed incident light may be different from each other. For example, the first reconstructed incident light may be radiated downward from above in a sloped direction 35a, and the second reconstructed incident light may be radiated upward from below in a sloped direction 35b.

The first hologram H1 and the second hologram H2 may be reconstructed independently of each other. Alternatively, the first hologram H1 and the second hologram H2 may combine to form a single unitary hologram.

In addition, the first hologram H1 and the second hologram H2 may be reconstructed together, or may be reconstructed separately.

In the lamp assembly 1 according to an embodiment of the present invention, since the hologram film 10 is divided into the first hologram film 10a and the second hologram film 10b and the reconstruction light source 30 is divided into the first reconstruction light source 30a and the second reconstruction light source 30b, it is possible to overcome a limitation in the reconstruction of the whole hologram using a single light source.

In the lamp assembly 1 according to an embodiment of the present invention, the first reconstruction light source 30a may be configured to emit the first reconstructed incident light only to the first hologram film 10a, and the second reconstruction light source 30b may be configured to emit the second reconstructed incident light only to the second hologram film 10b. Accordingly, the phase difference between beams of the first reconstructed incident light for reconstructing the first hologram H1 may be reduced, and the phase difference between beams of the second reconstructed incident light for reconstructing the second hologram H2 may be reduced. As a result, a completely clear hologram may be reconstructed.

In addition, in the lamp assembly 1 according to an embodiment of the present invention, since the hologram film 10 is divided into the first hologram film 10a and the second hologram film 10b and the reconstruction light source 30 is divided into the first reconstruction light source 30a and the second reconstruction light source 30b, the first reconstruction light source 30a and the second reconstruction light source 30b may be disposed at positions closer to the outside, and thus the thickness of the lamp assembly 1 may be further reduced.

In the lamp assembly 1 according to an embodiment of the present invention, the first hologram film 10a and the second hologram film 10b may be disposed so as to form a continuous flat surface together (refer to FIG. 5), or may be disposed so as to form a continuous curved surface together.

In addition, in the lamp assembly 1 according to an embodiment of the present invention, the first hologram film 10a and the first reconstruction light source 30a are symmetrical with the second hologram film 10b and the second reconstruction light source 30b.

Accordingly, it is possible to provide a lamp assembly 1 that is capable of being easily designed, easily reconstructing a single unitary hologram, and being reduced in thickness.

In the lamp assembly 1 according to an embodiment of the present invention, the first reconstruction light source 30a and the second reconstruction light source 30b may be disposed outside areas A1 and A2 in which the holograms are reconstructed when viewed in the horizontal direction. That is, when the region (area) in which the first hologram H1 is reconstructed through the first hologram film 10a is referred to as a first area A1 and the region (area) in which the second hologram H2 is reconstructed through the second hologram film 10b is referred to as a second area A2, both the first reconstruction light source 30a and the second reconstruction light source 30b may be disposed outside the first area A1 and the second area A2 when viewed in the horizontal direction.

Accordingly, as described above, the hologram and the light from the reconstruction light source 30 may be prevented from overlapping when shown to an observer present outside, and the hologram may be clearly identified.

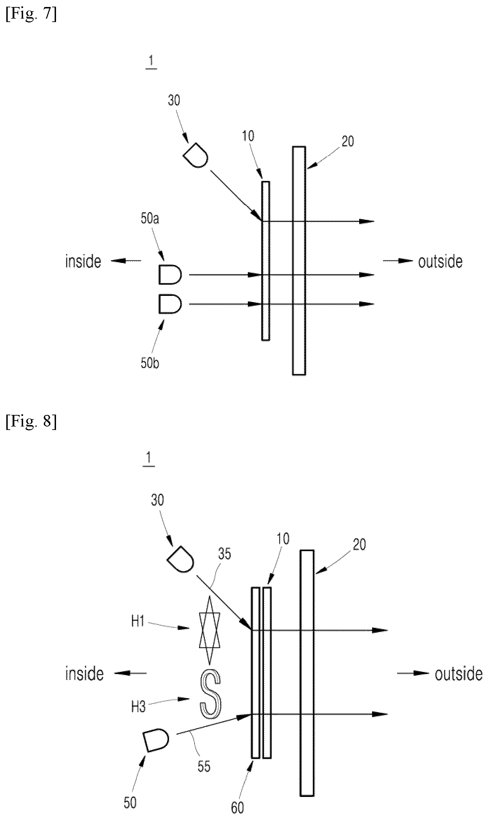

FIG. 6 is a cross-sectional view schematically illustrating a lamp assembly 1 for a vehicle, and FIG. 7 is a cross-sectional view schematically illustrating a lamp assembly 1 for a vehicle.

The lamp assembly 1 according to an embodiment of the present invention may further include an auxiliary light source 50.

The auxiliary light source 50 is disposed at a position further inside than the hologram film 10 and emits auxiliary incident light toward the hologram film 10.

The auxiliary light source 50 may be formed as any one of various types of lamps. The auxiliary light source 50 may be formed as a point light source or a surface light source. The auxiliary light source 50 may be formed as an LED lamp.

In the lamp assembly 1 according to FIG. 6, an angle θ2 between a radiation direction 55 of the auxiliary incident light and an arbitrary normal 12 of the incident surface 11 of the hologram film 10 may be less than the angle θ1 between the radiation direction 35 of the reconstructed incident light and another arbitrary normal 12 of the incident surface 11 of the hologram film 10.

Further, the angle θ2 may be 0°. That is, the radiation direction 55 of the auxiliary incident light may be identical to the direction of the normal 12 of the incident surface 11 of the hologram film 10.

Accordingly, although the auxiliary incident light from the auxiliary light source 50 is incident on the incident surface 11 of the hologram film 10, it transmits through the hologram film 10 to the outside without reconstructing the hologram or while having little influence on the reconstruction of the hologram. In addition, under the same conditions, a greater quantity of light is transmitted to the outside from the auxiliary light source 50 than from the reconstruction light source 30, and in the state in which both the reconstruction light source 30 and the auxiliary light source 50 are turned on, the auxiliary incident light may be identified dominantly or overwhelmingly when viewed from the outside.

In the lamp assembly 1 according to an embodiment of the present invention, the luminous intensity of the auxiliary incident light may be higher than the luminous intensity of the reconstructed incident light.

In the lamp assembly 1 according to an embodiment of the present invention, the reconstruction light source 30 and the auxiliary light source 50 may be turned on together, but may not necessarily be turned on together. Specifically, the reconstruction light source 30 may be turned on at a specific time point t1 and maintained in the on state, whereas the auxiliary light source 50 may be turned on at the time point t1 or later, and may be turned off at an arbitrary time point t2 after being turned on, or may repeatedly flash after being turned on, or may be turned off at an arbitrary time point t3 after repeated flashing.

In the lamp assembly 1 according to an embodiment of the present invention, when the reconstruction light source 30 and the hologram H reconstructed thereby function as the entirety or a part of a taillight, the auxiliary light source 50 may be used as a brake light, a turn signal, or the like.

For example, when the vehicle is driven in the state in which the reconstruction light source 30 is turned on, the reconstructed state of the hologram H is maintained, and in this state, when the auxiliary light source 50 is turned on as a brake light, the auxiliary incident light is transmitted through the hologram film 10 and is radiated to the outside. When viewed from the outside, the auxiliary incident light may be identified dominantly or overwhelmingly, thereby enabling identification of the turning-on of the brake light.

In addition, for example, when the vehicle is driven in the state in which the reconstruction light source 30 is turned on, the reconstructed state of the hologram H is maintained, and in this state, when the auxiliary light source 50 flashes as a turn signal, the auxiliary incident light passes through the hologram film 10 and is radiated to the outside. When viewed from the outside, the auxiliary incident light may be identified dominantly or overwhelmingly, thereby enabling identification of the flashing of the turn signal.

In the lamp assembly 1 according to an embodiment of the present invention, two or more auxiliary light sources 50 may be provided. In this case, two auxiliary light sources 50 may be configured to emit auxiliary incident light having different wavelengths.

When one auxiliary light source 50 is referred to as a first auxiliary light source 50a and the other auxiliary light source 50 is referred to as a second auxiliary light source 50b, the first auxiliary light source 50a may be used as a brake light, and the second auxiliary light source 50b may be used as a turn signal. In this case, the first auxiliary light source 50a may be configured to emit light having a wavelength of 620 to 660 nm, and the second auxiliary light source 50b may be configured to emit light having a wavelength of 520 to 590 nm. That is, the first auxiliary light source 50a may be configured to emit red light, and the second auxiliary light source 50b may be configured to emit yellow light.

As such, in the case in which the lamp assembly 1 according to an embodiment of the present invention includes the first auxiliary light source 50a and the second auxiliary light source 50b, in the state in which the reconstruction light source 30 is turned on and the hologram H is thus reconstructed, the first auxiliary light source 50a may be turned on as needed so as to activate the brake light, and the second auxiliary light source 50b may be turned on as needed so as to activate the turn signal.

According to the lamp assembly 1 according to an embodiment of the present invention configured as described above, reconstruction and identification of the hologram may be easily realized, and the auxiliary light source 50 may be turned on as needed in the area in which the hologram is reconstructed or in an area that overlaps the same. Accordingly, there may be provided a multi-functional lamp assembly 1 capable of additionally functioning as a brake light or a turn signal without an increase in the overall volume or installation space thereof.

FIG. 8 is a cross-sectional view schematically illustrating a lamp assembly 1 for a vehicle.

The lamp assembly 1 according to FIG. 8 may further include an auxiliary hologram film 60 in addition to the auxiliary light source 50 described above.

The auxiliary hologram film 60 is disposed at a position further inside than the light-transmissive cover 20 so as to be parallel to the hologram film 10. The auxiliary hologram film 60 has recorded therein an auxiliary hologram H3. The auxiliary hologram H3 is reconstructed by auxiliary incident light that is transmitted through the auxiliary hologram film 60 after being incident on the auxiliary hologram film 60.

The auxiliary hologram film 60 may be in close contact with or adjacent to the hologram film 10.

The auxiliary hologram film 60 may be disposed at a position further outside than the hologram film 10, or may be disposed at a position further inside than the hologram film 10.

The auxiliary hologram film 60 may be formed in the same configuration as the hologram film 10 described above. However, there is a difference in that light for reconstructing the hologram H1 is reconstructed incident light, whereas light for reconstructing the auxiliary hologram H3 is auxiliary incident light.

That is, in the lamp assembly 1 according to an embodiment of the present invention, the direction of the light for reconstructing the hologram H1 and the direction of the light for reconstructing the auxiliary hologram H3 may be different from each other. In addition, the wavelength and phase of the light for reconstructing the hologram H1 and the wavelength and phase of the light for reconstructing the auxiliary hologram H3 may be different from each other.

Accordingly, the reconstructed incident light simply passes through the auxiliary hologram film 60, but reconstructs the hologram H1 while passing through the hologram film 10. By contrast, the auxiliary incident light reconstructs the auxiliary hologram H3 while passing through the auxiliary hologram film 60, but simply penetrates through the hologram film 10.

According to the lamp assembly 1 according to an embodiment of the present invention configured as described above, the reconstruction light source 30 and the auxiliary light source 50 are selectively turned on as needed in order to selectively reconstruct the hologram H1 or the auxiliary hologram H3. Accordingly, there may be provided a lamp assembly 1 capable of producing a variety of stereoscopic images or variable stereoscopic images.

In addition, the hologram H1 and the auxiliary hologram H3 may be individually reconstructed in the same area or in areas that overlap each other when viewed in the horizontal direction. Accordingly, it is not necessary to increase the size of the lamp assembly 1 in order to realize this reconstruction.

In addition, in the lamp assembly 1 according to an embodiment of the present invention, as described above, the luminous intensity of the auxiliary incident light may be higher than the luminous intensity of the reconstructed incident light, and the angle that the radiation direction 55 of the auxiliary incident light forms with respect to the incident surface of the hologram film 10 may be less than the angle that the radiation direction 35 of the reconstructed incident light forms with respect to the incident surface of the hologram film 10. Accordingly, when the auxiliary light source 50 is turned on, the auxiliary hologram H3 may appear more prominently than the hologram H1.

The form, shape, and reconstruction type of the auxiliary hologram may be determined according to various needs. As described above, the auxiliary hologram may function as a brake light or a turn signal. In addition, the auxiliary hologram may be reconstructed in the shape of a three-dimensional figure, letter, symbol, word, or the like.

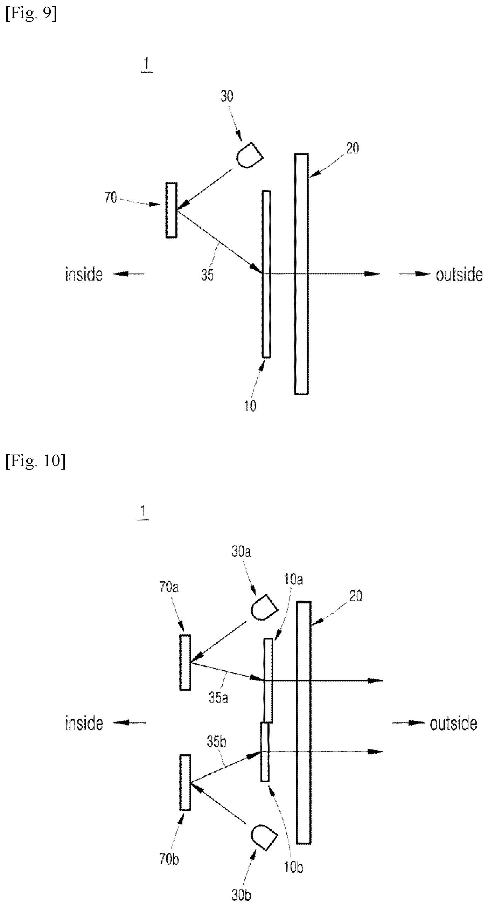

FIG. 9 is a cross-sectional view schematically illustrating a lamp assembly 1 for a vehicle not according to the invention, and FIG. 10 is a cross-sectional view schematically illustrating a lamp assembly 1 for a vehicle not according to the invention.

The lamp assembly 1 may include a hologram film 10, a light-transmissive cover 20, a reflector 70, and a reconstruction light source 30. In addition, the lamp assembly 1 may further include a lamp housing 40.

Here, the hologram film 10, the light-transmissive cover 20, and the lamp housing 40 may have the same configuration as described above.

The reconstruction light source 30 may have the same configuration as described above, except that it emits light toward the reflector 70, rather than directly emitting light toward the hologram film 10.

The reflector 70 is disposed at a position further inside than the hologram film 10 in order to reflect the light emitted from the reconstruction light source 30 so that the reflected light functions as the above-mentioned reconstructed incident light.

The angle between the radiation direction 35 of the reconstructed incident light and an arbitrary normal of the incident surface 11 of the hologram film 10 may be set within a predetermined range, and specifically may be set to the above-mentioned predetermined inclination angle.

The reflector 70 may be made of any one of various materials that reflect light, and may be formed as, for example, a mirror.

The reconstruction light source 30 is disposed at a position further outside than the reflector 70, and emits light toward the reflector 70.

In the lamp assembly 1 according to an embodiment of the present invention, the reconstruction light source 30 may be more freely disposed due to the reflector 70. In other words, the reconstruction light source 30 may be selectively disposed not only at a position further inside than the hologram film 10 but also at a position further outside than the hologram film 10. Accordingly, the thickness of the lamp assembly 1 may be further reduced due to the reflector 70.

In addition, as described above, a hologram may be reconstructed clearly, and the viewing angle of the hologram may be secured.

In the lamp assembly 1 according to an embodiment of the present invention, even when the reflector 70 is provided, the hologram film 10 may be divided into at least a first hologram film 10a and a second hologram film 10b. In this case, each of the first hologram film 10a and the second hologram film 10b may have the same configuration as described above.

In addition, the reconstruction light source 30 may be divided into at least a first reconstruction light source 30a and a second reconstruction light source 30b. The first reconstruction light source 30a and the second reconstruction light source 30b may have the same configuration as described above, except that they emit light toward the reflector 70, rather than directly emitting light toward the first hologram film 10a or the second hologram film 10b.

In addition, the reflector 70 may also be divided into a first reflector 70a and a second reflector 70b.

The first reflector 70a reflects light emitted from the first reconstruction light source 30a to form first reconstructed incident light to be incident on the first hologram film 10a, and the second reflector 70b reflects light emitted from the second reconstruction light source 30b to form second reconstructed incident light to be incident on the second hologram film 10b.

Therefore, when the first reconstruction light source 30a emits light, the first reflector 70a reflects the light such that the first reconstructed incident light is transmitted through the first hologram film 10a, whereby the above-mentioned first hologram is reconstructed. When the second reconstruction light source 30b emits light, the second reflector 70b reflects the light such that the second reconstructed incident light is transmitted through the second hologram film 10b, whereby the above-mentioned second hologram is reconstructed.

In the lamp assembly 1 according to an embodiment of the present invention, the first hologram film 10a, the first reconstruction light source 30a, and the first reflector 70a are symmetrical with the second hologram film 10b, the second reconstruction light source 30b, and the second reflector 70b. For example, these components may have a vertically symmetrical structure or a bilaterally symmetrical structure.

In the lamp assembly 1 according to an embodiment of the present invention, the hologram film 10 is divided into the first hologram film 10a and the second hologram film 10b, the reconstruction light source 30 is divided into the first reconstruction light source 30a and the second reconstruction light source 30b, and the reflector 70 is divided into the first reflector 70a and the second reflector 70b. Accordingly, there may be provided a lamp assembly 1 capable of clearly reconstructing a hologram and reducing the thickness thereof.

The lamp assembly 1 not according to the present invention, described with reference to FIG. 10, may have the same manner of operation and effects as the lamp assembly 1 according to an embodiment of the present invention described above with reference to FIGs. 3 to 5.

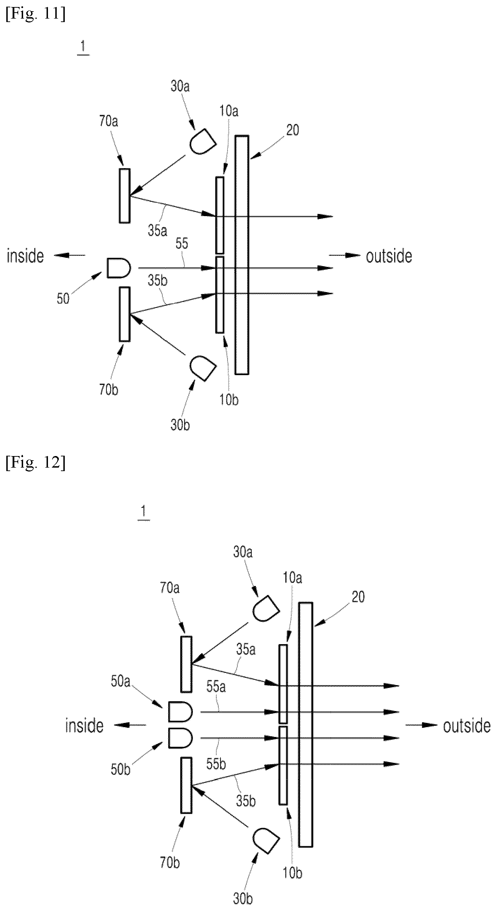

FIG. 11 is a cross-sectional view schematically illustrating a lamp assembly 1 for a vehicle according to still another embodiment of the present invention, and FIG. 12 is a cross-sectional view schematically illustrating a lamp assembly 1 for a vehicle according to still another embodiment of the present invention.

In the case in which reflectors 70, 70a and 70b are included, the lamp assembly 1 according to an embodiment of the present invention may further include an auxiliary light source 50. The auxiliary light source 50 may have the same configuration as described above, and the radiation directions 55, 55a and 55b of the auxiliary incident light and the radiation directions 35, 35a and 35b of the reconstructed incident light may also be the same as described above.

The lamp assembly 1 according to an embodiment of the present invention, described with reference to FIGs. 11 and 12, may have the same manner of operation and effects as the lamp assembly 1 according to an embodiment of the present invention described above with reference to FIGs. 6 and 7.

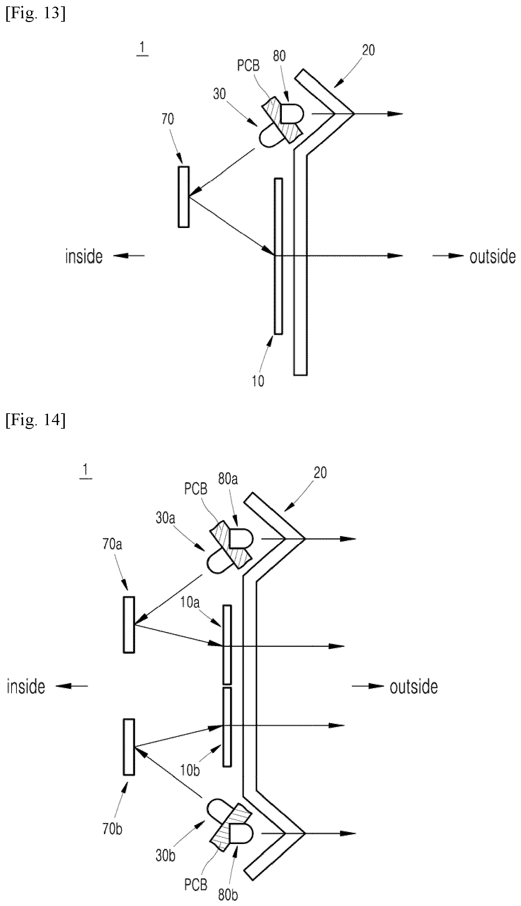

FIG. 13 is a cross-sectional view schematically illustrating a lamp assembly 1 for a vehicle according to still another embodiment not falling under the invention, and FIG. 14 is a cross-sectional view schematically illustrating a lamp assembly 1 for a vehicle according to still another embodiment of the present invention.

The lamp assembly 1 according to an embodiment of the present invention may further include a side light source 80.

The side light source 80 may be formed as any one of various types of lamps. The side light source 80 may be formed as a point light source or a surface light source. The side light source 80 may be formed as an LED lamp.

The side light source 80 is configured such that light emitted therefrom is radiated toward the outside of the light-transmissive cover 20 without interfering with the hologram film 10.

In the lamp assembly 1 according to an embodiment of the present invention, the reconstruction light source 30 and the side light source 80 may be respectively coupled to opposite surfaces of a single printed circuit board (PCB) substrate, and may thus be formed as a single module.

The side light source 80 may function as a brake light, a turn signal, or the like, and may be turned on separately from the reconstruction of the hologram.

In the lamp assembly 1 according to an embodiment of the present invention, the side light source 80 is configured such that light emitted therefrom is radiated to the outside without interfering with the hologram film 10, thereby independently providing visual information or signals during the reconstruction of the hologram.

The lamp assembly 1 according to an embodiment of the present invention may include a first side light source 80a and a second side light source 80b.

Each of the first side light source 80a and the second side light source 80b may be formed as any one of various types of lamps. Each of the first side light source 80a and the second side light source 80b may be formed as a point light source or a surface light source. Each of the first side light source 80a and the second side light source 80b may be formed as an LED lamp.

Each of the first side light source 80a and the second side light source 80b is configured such that light emitted therefrom is radiated toward the outside of the light-transmissive cover 20 without interfering with the hologram film 10.

In the lamp assembly 1 according to an embodiment of the present invention, when the first side light source 80a and the second side light source 80b are provided, the hologram film 10 may be divided into a first hologram film 10a and a second hologram film 10b, the reconstruction light source 30 may be divided into a first reconstruction light source 30a and a second reconstruction light source 30b, and the reflector 70 may also be divided into a first reflector 70a and a second reflector 70b.

The first reconstruction light source 30a and the first side light source 80a may be respectively coupled to opposite surfaces of a single PCB substrate, and may thus be formed as a single module. The second reconstruction light source 30b and the second side light source 80b may be respectively coupled to opposite surfaces of a single PCB substrate, and may thus be formed as a single module.

Due to the configuration described above, there may be provided a lamp assembly 1 capable of radiating a separate light beam without interfering with the reconstruction of a hologram and having a simple structure and a reduced thickness.

The lamp assembly for a vehicle according to an embodiment of the present invention has industrial applicability in that a hologram is reconstructed clearly, the viewing angle of a hologram increases, and the thickness of the lamp assembly is reduced.

## Claims

1. A lamp assembly (1) for a vehicle for being mounted to a front side or a rear side of a vehicle to emit light outwards, the lamp assembly (1) comprising:
a hologram film (10) in which a hologram is recorded, the hologram film (10) being configured such that the hologram is reconstructed inside by light that is transmitted after being irradiated from an inside with a slope with respect to a normal direction of the incident surface;
a light-transmissive cover (20) disposed at a position further outside than the hologram film (10); and
a reconstruction light source (30) disposed at a position further inside than the hologram film (10) with a slope with respect to the normal direction, the reconstruction light source (30) being configured to emit reconstruction incident light toward the hologram film (10) such that the hologram is reconstructed,
wherein
the hologram film (10) is divided into at least a first hologram film (10a) and a second hologram film (10b),
wherein the reconstruction light source (30) is divided into at least a first reconstruction light source (30a) configured to emit first reconstructed incident light toward the first hologram film (10a) and a second reconstruction light source (30b) configured to emit second reconstructed incident light toward the second hologram film (10b), and
wherein the first hologram film (10a) and the first reconstruction light source (30a) are symmetrical with the second hologram film (10b) and the second reconstruction light source (30b),
**characterized in that**
the hologram (H) is reconstructed in an area further inside than the hologram film (10), wherein the light transmissive cover (20) is transparent in order for the hologram to be identified when shown to an observer present outside.

2. The lamp assembly of claim 1, further comprising:
an auxiliary light source (50) disposed at a position further inside than the hologram film (10), the auxiliary light source (50) being configured to emit auxiliary incident light toward the hologram film (10),
wherein an angle between a radiation direction of the auxiliary incident light and the normal of the incident surface of the hologram film (10) is less than an angle between a radiation direction of the reconstructed incident light and the normal of the incident surface of the hologram film (10), wherein preferably
• a luminous intensity of the auxiliary incident light is higher than a luminous intensity of the reconstructed incident light, or
• two or more auxiliary light sources are provided to emit auxiliary incident lights having different wavelengths, or
• the lamp assembly further comprises an auxiliary hologram film disposed at a position further inside than the light-transmissive cover so as to be parallel to the hologram film and in which an auxiliary hologram is recorded, the auxiliary hologram film being configured such that the auxiliary hologram is reconstructed by the auxiliary incident light that is transmitted after being irradiated.

3. The lamp assembly of claim 1, further comprising:
an auxiliary light source (50) disposed at a position further inside than the hologram film (10), the auxiliary light source (50) being configured to emit auxiliary incident light toward the hologram film (10),
wherein a radiation direction of the auxiliary incident light is identical to the normal direction of the incident surface of the hologram film (10).

4. The lamp assembly of claim 1, further comprising:
a reflector (70) disposed at a position further inside than the hologram film (10); and
wherein the reconstruction light source (30) is disposed at a position further outside than the reflector (70), the reconstruction light source (30) being configured to emit light toward the reflector (70),
wherein light reflected by the reflector (70) forms reconstructed incident light that travels to the hologram film (10) such that the hologram is reconstructed
wherein the reflector (70) is divided into at least a first reflector (70a) configured to reflect light emitted from the first reconstruction light source (30a) to form first reconstruction incident light to be incident on the first hologram film (10a), and a second reflector (70b) configured to reflect light emitted from the second reconstruction light source (30b) to form second reconstruction incident light to be incident on the second hologram film (10b).

5. The lamp assembly of claim 4, wherein the first hologram film (10a), the first reconstruction light source (30a), and the first reflector (70a) are symmetrical with the second hologram film (10b), the second reconstruction light source (30b), and the second reflector (70b), or wherein the first hologram film (10a) and the second hologram film (10b) are disposed so as to form a continuous flat surface together or to form a continuous curved surface together.

6. The lamp assembly of claim 4, wherein a radiation direction of the first reconstruction incident light and a radiation direction of the second reconstruction incident light are different from each other.

7. The lamp assembly of claim 5 or 6, further comprising:
an auxiliary light source (50) disposed at a position further inside than the hologram film (10), the auxiliary light source (50) being configured to emit auxiliary incident light toward the hologram film (10),
wherein an angle between a radiation direction of the auxiliary incident light and the normal of the incident surface of the hologram film (10) is less than an angle between a radiation direction of the reconstruction incident light and the normal of the incident surface of the hologram film (10).

8. The lamp assembly of claim 5 or 6, further comprising:
an auxiliary light source (50) disposed at a position further inside than the hologram film (10), the auxiliary light source (50) being configured to emit auxiliary incident light toward the hologram film (10),
wherein a radiation direction of the auxiliary incident light is identical to the normal direction of the incident surface of the hologram film (10).

9. The lamp assembly of claim 7, wherein a luminous intensity of the auxiliary incident light is higher than a luminous intensity of the reconstruction incident light.

10. The lamp assembly of claim 1, further comprising:
a side light source (80) configured to emit light toward an outside of the light-transmissive cover such that the light does not interfere with the hologram film (10),
wherein the reconstruction light source (30) and the side light source are respectively coupled to opposite surfaces of a single printed circuit board (PCB) substrate.

11. The lamp assembly of claim 4, further comprising:
a first side light source (80a) and a second side light source (80b) configured to emit light toward an outside of the light-transmissive cover such that the light does not interfere with the hologram film (10),
wherein the first reconstruction light source (30a) and the first side light source (80a) are respectively coupled to opposite surfaces of a single PCB substrate, and
wherein the second reconstruction light source (30b) and the second side light source (80b) are respectively coupled to opposite surfaces of a single PCB substrate.

## Patentansprüche

1. Lampenanordnung (1) für ein Fahrzeug, die an der Vorderseite oder Rückseite eines Fahrzeugs angebracht wird, um Licht nach außen zu strahlen, wobei die Lampenanordnung (1) umfasst:
einen Hologrammfilm (10), in dem ein Hologramm aufgezeichnet ist, wobei der Hologrammfilm (10) so konfiguriert ist, dass das Hologramm im Inneren durch Licht rekonstruiert wird, das nach der Bestrahlung von innen mit einer Neigung in Bezug auf die Normalenrichtung der Einfallsoberfläche übertragen wird;
eine lichtdurchlässige Abdeckung (20), die an einer Position außerhalb des Hologrammfilms (10) angeordnet ist; und
eine Rekonstruktionslichtquelle (30), die an einer Position angeordnet ist, die weiter innen liegt als die Hologrammfolie (10), mit einer Neigung in Bezug auf die Normalenrichtung, wobei die Rekonstruktionslichtquelle (30) so konfiguriert ist, dass sie Rekonstruktions-Einfallslicht in Richtung der Hologrammfolie (10) emittiert, so dass das Hologramm rekonstruiert wird,
wobei
der Hologrammfilm (10) in mindestens einen ersten Hologrammfilm (10a) und einen zweiten Hologrammfilm (10b) unterteilt ist,
wobei die Rekonstruktionslichtquelle (30) in mindestens eine erste Rekonstruktionslichtquelle (30a), die so konfiguriert ist, dass sie erstes rekonstruiertes einfallendes Licht auf den ersten Hologrammfilm (10a) emittiert, und eine zweite Rekonstruktionslichtquelle (30b) unterteilt ist, die so konfiguriert ist, dass sie zweites rekonstruiertes einfallendes Licht auf den zweiten Hologrammfilm (10b) emittiert, und
wobei der erste Hologrammfilm (10a) und die erste Rekonstruktionslichtquelle (30a) symmetrisch zu dem zweiten Hologrammfilm (10b) und der zweiten Rekonstruktionslichtquelle (30b) sind,
**dadurch gekennzeichnet, dass**
das Hologramm (H) in einem Bereich rekonstruiert wird, der weiter innen liegt als der Hologrammfilm (10), wobei die lichtdurchlässige Abdeckung (20) transparent ist, damit das Hologramm identifiziert werden kann, wenn es einem außerhalb befindlichen Betrachter gezeigt wird.

2. Lampenanordnung nach Anspruch 1, ferner umfassend:
eine Hilfslichtquelle (50), die an einer Position angeordnet ist, die weiter innen liegt als die Hologrammfolie (10), wobei die Hilfslichtquelle (50) so konfiguriert ist, dass sie Hilfs-Einfallslicht in Richtung der Hologrammfolie (10) emittiert,
wobei der Winkel zwischen der Strahlungsrichtung des Hilfs-Einfallslichts und der Normalen der Einfallsfläche des Hologrammfilms (10) kleiner ist als der Winkel zwischen der Strahlungsrichtung des rekonstruierten Einfallslichts und der Normalen der Einfallsfläche des Hologrammfilms (10), wobei vorzugsweise
• die Lichtstärke des Hilfs-Einfallslichts höher ist als die Lichtstärke des rekonstruierten Einfallslichts, oder
• zwei oder mehr Hilfslichtquellen vorgesehen sind, um Hilfs-Einfallslicht mit unterschiedlichen Wellenlängen zu emittieren, oder
• die Lampenanordnung ferner einen Hilfs-Hologrammfilm umfasst, der an einer Position weiter innen als die lichtdurchlässige Abdeckung angeordnet ist, so dass er parallel zum Hologrammfilm ist, und in dem ein Hilfs-Hologramm aufgezeichnet ist, wobei der Hilfs-Hologrammfilm so konfiguriert ist, dass das Hilfs-Hologramm durch das Hilfs-Einfallslicht rekonstruiert wird, das nach der Bestrahlung übertragen wird.

3. Lampenanordnung nach Anspruch 1, die ferner umfasst:
eine Hilfslichtquelle (50), die an einer Position angeordnet ist, die weiter innen liegt als die Hologrammfolie (10), wobei die Hilfslichtquelle (50) so konfiguriert ist, dass sie Hilfs-Einfallslicht in Richtung der Hologrammfolie (10) emittiert,
wobei die Strahlungsrichtung des Hilfs-Einfallslichts identisch mit der Normalenrichtung der Einfallsfläche der Hologrammfolie (10) ist.

4. Lampenanordnung nach Anspruch 1, die ferner umfasst:
einen Reflektor (70), der an einer Position angeordnet ist, die weiter innen liegt als die Hologrammfolie (10); und
wobei die Rekonstruktionslichtquelle (30) an einer Position angeordnet ist, die weiter außen liegt als der Reflektor (70), wobei die Rekonstruktionslichtquelle (30) so konfiguriert ist, dass sie Licht in Richtung des Reflektors (70) emittiert,
wobei das vom Reflektor (70) reflektierte Licht rekonstruiertes einfallendes Licht bildet, das zum Hologrammfilm (10) gelangt, so dass das Hologramm rekonstruiert wird
wobei der Reflektor (70) in mindestens einen ersten Reflektor (70a), der so konfiguriert ist, dass er von der ersten Rekonstruktionslichtquelle (30a) emittiertes Licht reflektiert, um erstes Rekonstruktionseinfallungslicht zu bilden, das auf den ersten Hologrammfilm (10a) einfällt, und einen zweiten Reflektor (70b) unterteilt ist, der so konfiguriert ist, dass er von der zweiten Rekonstruktionslichtquelle (30b) emittiertes Licht reflektiert, um zweites Rekonstruktionseinfallungslicht zu bilden, das auf den zweiten Hologrammfilm (10b) einfällt.

5. Lampenanordnung nach Anspruch 4, wobei die erste Hologrammfolie (10a), die erste Rekonstruktionslichtquelle (30a) und der erste Reflektor (70a) symmetrisch zu dem zweiten Hologrammfilm (10b), der zweiten Rekonstruktionslichtquelle (30b) und dem zweiten Reflektor (70b) angeordnet sind, oder wobei der erste Hologrammfilm (10a) und der zweite Hologrammfilm (10b) so angeordnet sind, dass sie zusammen eine durchgehende ebene Fläche oder eine durchgehende gekrümmte Fläche bilden.

6. Lampenanordnung nach Anspruch 4, wobei sich die Strahlungsrichtung des ersten rekonstruierten einfallenden Lichts und die Strahlungsrichtung des zweiten rekonstruierten einfallenden Lichts voneinander unterscheiden.

7. Lampenanordnung nach Anspruch 5 oder 6, die ferner umfasst:
eine Hilfslichtquelle (50), die an einer Position angeordnet ist, die weiter innen liegt als die Hologrammfolie (10), wobei die Hilfslichtquelle (50) so konfiguriert ist, dass sie Hilfs-Einfallslicht in Richtung der Hologrammfolie (10) emittiert,
wobei ein Winkel zwischen einer Strahlungsrichtung des Hilfs-Einfallslichts und der Normalen der Einfallsfläche des Hologrammfilms (10) kleiner ist als ein Winkel zwischen einer Strahlungsrichtung des Rekonstruktions-Einfallslichts und der Normalen der Einfallsfläche des Hologrammfilms (10).

8. Lampenanordnung nach Anspruch 5 oder 6, die ferner umfasst:
eine Hilfslichtquelle (50), die an einer Position angeordnet ist, die weiter innen liegt als die Hologrammfolie (10), wobei die Hilfslichtquelle (50) so konfiguriert ist, dass sie Hilfs-Einfallslicht in Richtung der Hologrammfolie (10) emittiert,
wobei die Strahlungsrichtung des Hilfs-Einfallslichts identisch mit der Normalenrichtung der Einfallsfläche der Hologrammfolie (10) ist.

9. Lampenanordnung nach Anspruch 7, wobei eine Lichtintensität des Hilfs-Einfallslichts höher ist als eine Lichtintensität des Rekonstruktions-Einfallslichts.

10. Lampenanordnung nach Anspruch 1, die ferner umfasst:
eine Seitenlichtquelle (80), die so konfiguriert ist, dass sie Licht in Richtung einer Außenseite der lichtdurchlässigen Abdeckung emittiert, sodass das Licht das Hologrammfilm (10) nicht stört, wobei die Rekonstruktionslichtquelle (30) und die Seitenlichtquelle jeweils mit gegenüberliegenden Oberflächen eines einzelnen Leiterplatten-Substrats (PCB) gekoppelt sind.

11. Lampenanordnung nach Anspruch 4, ferner umfassend:
eine erste Seitenlichtquelle (80a) und eine zweite Seitenlichtquelle (80b), die so konfiguriert sind, dass sie Licht in Richtung einer Außenseite der lichtdurchlässigen Abdeckung emittieren, sodass das Licht das Hologrammfilm (10) nicht stört,
wobei die erste Rekonstruktionslichtquelle (30a) und die erste seitliche Lichtquelle (80a) jeweils an gegenüberliegenden Oberflächen eines einzigen PCB-Substrats angebracht sind, und
wobei die zweite Rekonstruktionslichtquelle (30b) und die zweite seitliche Lichtquelle (80b) jeweils an gegenüberliegenden Oberflächen eines einzigen PCB-Substrats angebracht sind.

## Revendications

1. Ensemble de lampe (1) pour véhicule destiné à être monté sur le côté avant ou arrière d'un véhicule afin d'émettre de la lumière vers l'extérieur, l'ensemble de lampe (1) comprenant :
un film holographique (10) sur lequel est enregistré un hologramme, le film holographique (10) étant configuré de telle sorte que l'hologramme est reconstruit à l'intérieur par la lumière qui est transmise après avoir été irradiée depuis l'intérieur avec une inclinaison par rapport à la direction normale de la surface d'incidence ;
un couvercle transmettant la lumière (20) disposé à une position plus à l'extérieur que le film holographique (10) ; et
une source de lumière de reconstruction (30) disposée à une position plus à l'intérieur que le film holographique (10) avec une pente par rapport à la direction normale, la source de lumière de reconstruction (30) étant configurée pour émettre une lumière incidente de reconstruction vers le film holographique (10) de telle sorte que l'hologramme soit reconstruit,
dans lequel
le film holographique (10) est divisé en au moins un premier film holographique (10a) et un deuxième film holographique (10b),
dans lequel la source de lumière de reconstruction (30) est divisée en au moins une première source de lumière de reconstruction (30a) configurée pour émettre une première lumière incidente reconstruite vers le premier film holographique (10a) et une deuxième source de lumière de reconstruction (30b) configurée pour émettre une deuxième lumière incidente reconstruite vers le deuxième film holographique (10b), et
dans lequel le premier film holographique (10a) et la première source de lumière de reconstruction (30a) sont symétriques par rapport au deuxième film holographique (10b) et à la deuxième source de lumière de reconstruction (30b),
**caractérisé en ce que**
l'hologramme (H) est reconstruit dans une zone plus à l'intérieur que le film holographique (10), dans lequel le couvercle transmettant la lumière (20) est transparent afin que l'hologramme puisse être identifié lorsqu'il est montré à un observateur présent à l'extérieur.

2. Ensemble de lampe selon la revendication 1, comprenant en outre :
une source de lumière auxiliaire (50) disposée à une position plus à l'intérieur que le film holographique (10), la source de lumière auxiliaire (50) étant configurée pour émettre une lumière incidente auxiliaire vers le film holographique (10),
dans lequel l'angle entre la direction de rayonnement de la lumière incidente auxiliaire et la normale à la surface incidente du film holographique (10) est inférieur à l'angle entre la direction de rayonnement de la lumière incidente reconstruite et la normale à la surface incidente du film holographique (10), dans lequel de préférence
• l'intensité lumineuse de la lumière incidente auxiliaire est supérieure à l'intensité lumineuse de la lumière incidente reconstruite, ou
• deux sources lumineuses auxiliaires ou plus sont prévues pour émettre des lumières incidentes auxiliaires ayant des longueurs d'onde différentes, ou
• l'ensemble de lampes comprend en outre un film holographique auxiliaire disposé à une position plus à l'intérieur que le couvercle transmettant la lumière de manière à être parallèle au film holographique et dans lequel un hologramme auxiliaire est enregistré, le film holographique auxiliaire étant configuré de telle sorte que l'hologramme auxiliaire est reconstruit par la lumière incidente auxiliaire qui est transmise après avoir été irradiée.

3. Ensemble de lampe selon la revendication **1,** comprenant en outre :
une source lumineuse auxiliaire (50) disposée à une position plus à l'intérieur que le film holographique (10), la source lumineuse auxiliaire (50) étant configurée pour émettre une lumière incidente auxiliaire vers le film holographique (10),
dans lequel la direction de rayonnement de la lumière incidente auxiliaire est identique à la direction normale de la surface incidente du film holographique (10).

4. Ensemble de lampe selon la revendication 1, comprenant en outre :
un réflecteur (70) disposé à une position plus à l'intérieur que le film holographique (10) ; et
dans lequel la source de lumière de reconstruction (30) est disposée à une position plus à l'extérieur que le réflecteur (70), la source de lumière de reconstruction (30) étant configurée pour émettre de la lumière vers le réflecteur (70),
dans lequel la lumière réfléchie par le réflecteur (70) forme une lumière incidente reconstruite qui se propage vers le film holographique (10) de telle sorte que l'hologramme est reconstruit dans lequel le réflecteur (70) est divisé en au moins un premier réflecteur (70a) configuré pour réfléchir la lumière émise par la première source lumineuse de reconstruction (30a) afin de former une première lumière incidente de reconstruction devant être incidente sur le premier film holographique (10a), et un deuxième réflecteur (70b) configuré pour réfléchir la lumière émise par la deuxième source lumineuse de reconstruction (30b) afin de former une deuxième lumière incidente de reconstruction devant être incidente sur le deuxième film holographique (10b).

5. Ensemble de lampe selon la revendication 4, dans lequel le premier film holographique (10a), la première source de lumière de reconstruction (30a) et le premier réflecteur (70a) sont symétriques par rapport au deuxième film holographique (10b), à la deuxième source de lumière de reconstruction (30b) et au deuxième réflecteur (70b), ou dans lequel le premier film holographique (10a) et le deuxième film holographique (10b) sont disposés de manière à former ensemble une surface plane continue ou à former ensemble une surface courbe continue.

6. Ensemble de lampe selon la revendication 4, dans lequel une direction de rayonnement de la première lumière incidente de reconstruction et une direction de rayonnement de la deuxième lumière incidente de reconstruction sont différentes l'une de l'autre.

7. Ensemble de lampe selon la revendication 5 ou 6, comprenant en outre :
une source de lumière auxiliaire (50) disposée à une position plus à l'intérieur que le film holographique (10), la source de lumière auxiliaire (50) étant configurée pour émettre une lumière incidente auxiliaire vers le film holographique (10),
dans lequel un angle entre une direction de rayonnement de la lumière incidente auxiliaire et la normale de la surface incidente du film holographique (10) est inférieur à un angle entre une direction de rayonnement de la lumière incidente de reconstruction et la normale de la surface incidente du film holographique (10).

8. Ensemble de lampe selon la revendication 5 ou 6, comprenant en outre :
une source lumineuse auxiliaire (50) disposée à une position plus à l'intérieur que le film holographique (10), la source lumineuse auxiliaire (50) étant configurée pour émettre une lumière incidente auxiliaire vers le film holographique (10),
dans lequel la direction de rayonnement de la lumière incidente auxiliaire est identique à la direction normale de la surface incidente du film holographique (10).

9. Ensemble de lampe selon la revendication 7, dans lequel l'intensité lumineuse de la lumière incidente auxiliaire est supérieure à l'intensité lumineuse de la lumière incidente de reconstruction.

10. Ensemble de lampe selon la revendication 1, comprenant en outre :
une source de lumière latérale (80) configurée pour émettre de la lumière vers l'extérieur du couvercle transmettant la lumière de telle sorte que la lumière n'interfère pas avec le film holographique (10),
dans lequel la source de lumière de reconstruction (30) et la source de lumière latérale sont respectivement couplées à des surfaces opposées d'un seul substrat de carte de circuit imprimé (PCB).

11. Ensemble de lampe selon la revendication 4, comprenant en outre :
une première source lumineuse latérale (80a) et une deuxième source lumineuse latérale (80b) configurées pour émettre de la lumière vers l'extérieur du couvercle transmettant la lumière de telle sorte que la lumière n'interfère pas avec le film holographique (10),
dans lequel la première source lumineuse de reconstruction (30a) et la première source lumineuse latérale (80a) sont respectivement couplées à des surfaces opposées d'un seul substrat PCB, et
dans lequel la deuxième source lumineuse de reconstruction (30b) et la deuxième source lumineuse latérale (80b) sont respectivement couplées à des surfaces opposées d'un seul substrat PCB.
